(19) Europäisches Patentamt
European Patent Office
Office européen des brevets

(11) Veröffentlichungsnummer: **0 291 456 B1**

(12) **EUROPÄISCHE PATENTSCHRIFT**

(45) Veröffentlichungstag der Patentschrift: **22.06.94**

(51) Int. Cl.$^5$: **C09B 23/16**, C09B 26/02, B41M 5/00

(21) Anmeldenummer: **88810294.4**

(22) Anmeldetag: **05.05.88**

(54) **Chromogene polycyclische Azamethinverbindungen und ihre Herstellung und Verwendung.**

(30) Priorität: **11.05.87 CH 1792/87**

(43) Veröffentlichungstag der Anmeldung:
**17.11.88 Patentblatt 88/46**

(45) Bekanntmachung des Hinweises auf die Patenterteilung:
**22.06.94 Patentblatt 94/25**

(84) Benannte Vertragsstaaten:
**BE CH DE FR GB LI**

(56) Entgegenhaltungen:
**DE-A- 3 321 130**
**FR-A- 2 303 806**

**CHEMICAL ABSTRACTS, Band 82, Nr. 12, 24. März 1975, Seite 78, Zusammenfassung Nr. 74461r, Columbus, Ohio, US; & JP-A-74 06 153 (MITSUBISHI CHEMICAL INDUSTRIES CO. LTD) 12-02-1974**

**CHEMICAL ABSTRACTS, Band 107, Nr. 26, 28. Dezember 1987, Seite 94, Zusammenfassung Nr. 238576v, Columbus, Ohio, US; & JP-A-62 167 361 (NIPPON KAYAKU CO. LTD) 23-07-1987**

(73) Patentinhaber: **CIBA-GEIGY AG**
**Klybeckstrasse 141**
**CH-4002 Basel(CH)**

(72) Erfinder: **Zink, Rudolf**
**Alemannenstrasse 2**
**CH-4106 Therwil(CH)**

**EP 0 291 456 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft chromogene polycyclische Azamethinverbindungen, Verfahren zu ihrer Herstellung und ihre Verwendung als Farbbildner in druckempfindlichen oder wärmeempfindlichen Aufzeichnungsmaterialien.

In der FR-A-2,303,806 werden Methinverbindungen auf Basis von Indoleinen offenbart, die als Farbbildner für die Verwendung in einem wärme- oder druckempfindlichen Aufzeichnungsmaterial geeignet sind.

Die neuen Azamethinverbindungen entsprechen der allgemeinen Formel

(1) 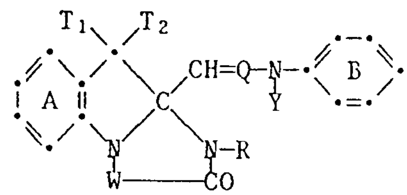

worin $T_1$ und $T_2$ Niederalkyl, Cycloalkyl, Benzyl oder zusammen Alkylen,

Q N,

W Alkylen, Alkenylen, 1,2-Cycloalkylen oder 1,2-Arylen,

R Wasserstoff, Niederalkyl, Aryl oder Aralkyl und

Y unsubstituiertes oder durch Halogen, Hydroxyl, Cyano oder Niederalkoxy substituiertes Alkyl oder Alkenyl mit höchstens 12 Kohlenstoffatomen oder Aralkyl

bedeuten und der Ring A unsubstituiert oder durch Halogen, Cyano, Hydroxy, Niederalkyl, Niederalkoxy, Niederalkylcarbonyl, Niederalkylcarbonyloxy, Niederalkylamino, Diniederalkylamino oder Niederalkylcarbonylamino und der Ring B unsubstituiert oder durch Halogen, Cyano, $C_1$-$C_{12}$-Alkyl, $C_1$-$C_{12}$-Alkoxy, $C_2$-$C_{12}$-Alkoxyalkyl, $C_2$-$C_{12}$-Alkoxyalkoxy oder Aralkoxy substituiert ist.

Niederalkyl und Niederalkoxy stellen in der Regel Gruppen oder Gruppenbestandteile dar, die 1 bis 5, vorzugsweise 1 bis 3 Kohlenstoffatome aufweisen, wie z.B. Methyl, Ethyl, Propyl, Isopropyl, sek. Butyl, tert. Butyl, Amyl oder Isoamyl bzw. Methoxy, Ethoxy, Isopropoxy, tert. Butoxy oder tert. Amyloxy.

Halogen bedeutet beispielsweise Fluor, Brom oder vorzugsweise Chlor.

Beispiele für Cycloalkyl in der Bedeutung der Reste $T_1$ und $T_2$ sind Cyclopentyl oder vorzugsweise Cyclohexyl.

Bedeuten $T_1$ und $T_2$ zusammen Alkylen, so weisen diese mit Vorteil 4 oder 5 Kohlenstoffatome auf, und bilden mit dem sie verbindenden Kohlenstoffatom einen Cyclopentan- oder Cyclohexanring.

Vorzugsweise bedeuten $T_1$ und $T_2$ Niederalkyl und vor allem beide Methyl.

W in der Bedeutung eines Alkylenrestes weist zweckmässigerweise 1 bis 4 Kohlenstoffatome auf und kann geradkettig oder verzweigt sein. Es handelt sich beispielsweise um die $-CH_2-$, $-CH_2CH_2-$ oder

$$-\underset{CH_3}{CH}-CH_2-\text{Gruppe.}$$

Als Alkenylen stellt W vor allem -CH = CH- dar.

Als Cycloalkylen für W kommt vor allem die 1,2-Cyclohexylengruppe in Frage.

Als Arylen stellt W vorzugsweise einen Benzolring dar, der unsubstituiert oder durch Halogen, Methyl oder Methoxy substituiert ist.

Vorzugsweise bedeutet W 1,2-Phenylen, 1,2-Cyclohexylen, Methylen, Isopropylen oder vor allem Ethylen ($-CH_2CH_2-$).

Der N-Substituent R ist vorzugsweise Wasserstoff. Vorteilhafterweise kann R auch Methyl oder Aryl darstellen. Falls R Aryl oder Aralkyl ist, so stellt er besonders Phenyl, Tolyl, Chlorphenyl, Benzyl oder Phenethyl dar.

Die Alkyl- und Alkenylreste von Y können geradkettig oder verzweigt sein. Beispiele hierfür sind Methyl, Ethyl, n-Propyl, Isopropyl, n-Butyl, sek. Butyl, Amyl, Isoamyl, n-Hexyl, 2-Ethylhexyl, Octyl, Isooctyl oder n-Dodecyl bzw. Vinyl, Allyl, 2-Methylallyl, 2-Ethylallyl, 2-Butenyl oder Octenyl.

Als Aralkyl kann Y Phenethyl, p-Chlor-Benzyl, 2,4-Dimethylbenzyl oder vor allem Benzyl sein. Ist der Alkylrest in Y substituiert, so handelt es sich vor allem um Cyanoalkyl, Halogenalkyl, Hydroxyalkyl oder Alkoxyalkyl mit insgesamt vorzugsweise 2 bis 8 Kohlenstoffatomen, wie z.B. β-Cyanoethyl, β-Chloroethyl,

β-Hydroxyethyl, β-Methoxyethyl, β-Ethoxyethyl oder eine Chlorhydringruppe.

Vorzugsweise ist Y Methyl, Ethyl, Allyl, Octyl oder Benzyl.

Der Ring A ist vorzugsweise nicht weiter substituiert oder durch Halogen, Cyano, Niederalkyl, Niederalkoxy oder Niederalkoxy-carbonyl, z.B. durch Chlor, Methyl, Methoxy oder Carbomethoxy weiter substituiert.

Falls der Ring B Substituenten aufweist, ist er in erster Linie durch Halogen, Cyano, $C_1$-$C_{12}$-Alkyl, $C_1$-$C_{12}$-Alkoxy, $C_2$-$C_6$-Alkoxyalkyl, Hydroxy-$C_2$-$C_5$-alkyl, Aralkoxy wie Benzyloxy oder eine Glykolethergruppe, wie z.B. $-O-(CH_2CH_2O)_m-R'$, worin R' Wasserstoff, Phenyl, Benzyl oder Niederalkyl und m 1 bis 5 vorzugsweise 1 oder 2 bedeutet, substituiert.

Praktisch wichtige chromogene polycyclische Azamethinverbindungen entsprechen der Formel

(2) 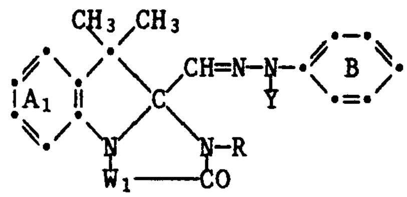

worin der Ring $A_1$ unsubstituiert oder durch Halogen, Cyano, Niederalkyl oder Niederalkoxy substituiert ist, $W_1$ Ethylen, Isopropylen, 1,2-Cyclohexylen oder 1,2-Phenylen bedeutet und R, Y und B die angegebene Bedeutung haben.

Unter den Azamethinverbindungen der Formel (2) sind diejenigen, in denen der Ring $A_1$ unsubstituiert oder durch Halogen, Niederalkyl oder Niederalkoxy substituiert ist, bevorzugt. In der Formel (2) ist $W_1$ vorteilhafterweiseIsopropylen oder vorzugsweise Ethylen.

Von grossem Interesse sind Azamethinverbindungen der Formel

(3) 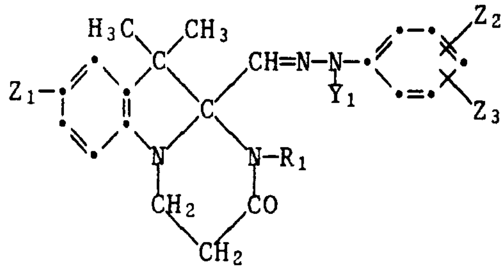

worin

- $R_1$ Wasserstoff, Niederalkyl, Phenyl oder Chlorphenyl,
- $Y_1$ $C_1$-$C_8$-Alkyl, Allyl, Benzyl oder Phenethyl,
- $Z_1$ Wasserstoff, Halogen, $C_1$-$C_3$-Alkoxy oder $C_1$-$C_4$-Alkyl,
- $Z_2$ Wasserstoff, Cyano, Halogen, $C_1$-$C_5$-Alkoxy, $C_2$-$C_8$-Alkoxyalkoxy oder $C_1$-$C_{12}$-Alkyl und
- $Z_3$ Wasserstoff, Halogen, $C_1$-$C_5$-Alkoxy oder $C_1$-$C_5$-Alkyl

bedeuten.

Besonders bevorzugt sind Azamethinverbindungen der Formel

(4) 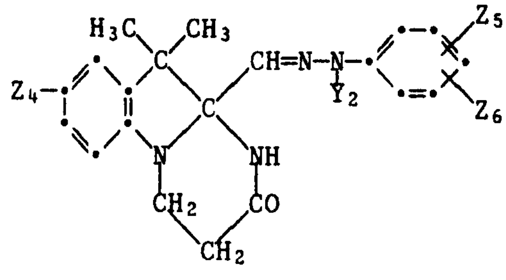

worin

- $Y_2$ Methyl, Ethyl, N-Octyl, Allyl oder Benzyl,

$Z_4$ Wasserstoff oder Chlor,
$Z_5$ Wasserstoff, Chlor, $C_1$-$C_4$-Alkoxy, $C_2$-$C_8$-Alkoxyalkoxy oder $C_1$-$C_{12}$-Alkyl und
$Z_6$ Wasserstoff, Chlor oder Methyl

bedeuten.

Die erfindungsgemässen polycyclischen Azamethinverbindungen der Formel (1) werden dadurch hergestellt, dass man ein quaternäres Ammoniumsalz der Formel

(5) 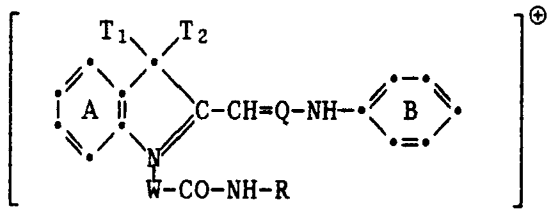 $An^{\ominus}$

worin

$An^{\ominus}$ ein Anion einer anorganischen oder organischen Säure bedeutet und A, B, Q, R, $T_1$, $T_2$ und W die angegebene Bedeutung haben,

mit einem den Rest Y einführenden Alkylierungsmittel, das gegebenenfalls durch einen Arylrest substituiert ist, umsetzt und die erhaltene Verbindung zur polycyclischen Azamethinverbindung der Formel (1) cyclisiert.

Zweckmässig arbeitet man in alkalischen Medien, sowohl in Wasser als auch in einem nicht an der Kondensation teilnehmenden, organischen Lösungsmittel und in Gegenwart einer Alkaliverbindung, wie z.B. Alkalimetallhydroxide, Alkalimetallcarbonate oder -bicarbonate, Ammoniumhydroxid, Ammoniumcarbonat, Ammoniumhydrogencarbonat oder Magnesiumoxid. Die Alkylierung bzw. Aralkylierung erfolgt vorzugsweise bie einem pH-Wert von 7,5 bis 9, während die Cyclisierung vorzugsweise bei einem erhöhten pH-Wert von 9,5 bis 12,5 geschieht.

Sowohl die Alkylierung als auch die Cyclisierung kann schon bei einer Temperatur von 30 bis 50 °C vorgenommen werden. In gewissen Fällen und besonders bei Verwendung von Aralkylierungsmitteln und organischen Lösungsmitteln ist es nötig bei höheren Temperaturen, vorzugsweise 70 bis 150 °C, zu arbeiten.

Die Reaktionsdauer hängt von der Temperatur ab und liegt insgesamt in der Regel zwischen 2 und 15 Stunden, vorzugsweise 3 bis 6 Stunden.

Geeignete organische Lösungsmittel, die das Reaktionsmedium bilden, sind cycloaliphatische oder vorzugsweise aromatische Kohlenwasserstoffe, wie z.B. Cyclohexan, Benzol, Toluol oder Xylol; Chlorkohlenwasserstoffe, wie z.B. Ethylenchlorid, Tetrachlorethylen oder Chlorbenzole, wie z.B. Chlorbenzol, Chlortoluol oder Dichlorbenzol; cyclische Ether, wie z.B. Dioxan oder Tetrahydrofuran; Dimethylsulfoxid oder Nitrile aliphatischer Monocarbonsäuren, wie z.B. Acetonitril, Propionitril oder Butyronitril. Auch Mischungen der genannten Lösungsmittel können verwendet werden. Bevorzugte Lösungsmittel sind Chlorbenzol, Chlortoluol und besonders Toluol.

Die Ausgangsstoffe der Formel (5) können in an sich bekannter Weise hergestellt werden. Ein bevorzugtes Verfahren besteht darin, dass man eine kupplungsfähige heterocyclische Verbindung der Formel

(6) 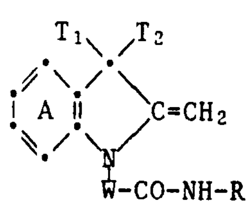

mit dem Diazoniumsalz einer Anilinverbindung der Formel

(7) 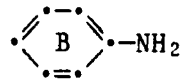

kuppelt, worin A, B, $T_1$, $T_2$, W und R die angegebene Bedeutung haben.

Geeignete Alkylierungsmittel zur Umsetzung mit den Ausgangsstoffen der Formel (5) sind Alkylhalogenide, wie z.B. Methyl-, Ethyl- oder Allyljodid, -bromid oder -chlorid oder Dialkylsulfate, wie Dimethyl- oder Diethylsulfat. Als Aralkylierungsmittel eignet sich insbesondere Benzylchlorid und die entsprechende Substitutionsprodukte, wie z.B. p-Chlorbenzylchlorid oder 2,4-Dimethylbenzylchlorid, die vorzugsweise in einem nicht-polaren organischen Lösungsmittel, wie z.B. Benzol, Toluol oder Xylol, verwendet werden.

In einem Alternativverfahren werden die Azamethinverbindungen der Formel (1), in der R Niederalkyl, Aryl oder Aralkyl bedeutet dadurch hergestellt, dass man eine Verbindung der Formel

(8) 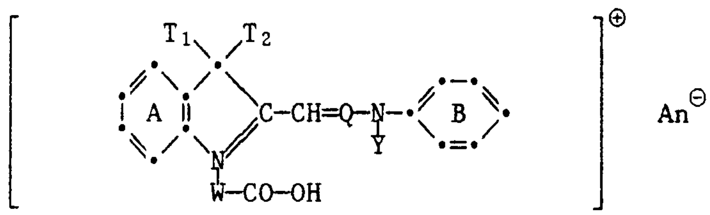

worin A, B, Q, $T_1$, $T_2$, W, Y und $An^{\ominus}$ die angegebene Bedeutung haben, mit einem Amin der Formel $R\text{-}NH_2$ (9) in Gegenwart von Phosphoroxichlorid oder Thionylchlorid unter intermediärer Bildung des Säurechlorids umsetzt.

Die Umsetzung erfolgt zweckmässigerweise in einem organischen Lösungsmittel.

Als Lösungsmittel kommen beispielsweise cycloaliphatische oder aromatische Kohlenwasserstoffe, wie z.B. Cyclohexan, Benzol, Toluol oder Xylol; Chlorkohlenwasserstoffe, wie Chloroform, Ethylenchlorid oder Chlorbenzole insbesondere Dichlorbenzol; Ether, wie Diethylether oder Glykoldimethylether; cyclische Ether, wie z.B. Dioxan oder Tetrahydrofuran in Betracht.

Der Lactamringschluss erfolgt bei erhöhter Temperatur und in Anwesenheit eines säurebindenden Mittels, wie z.B. eines Alkalimetallhydroxides oder Alkalimetallcarbonates.

Die Ausgangsstoffe der Formel (8) können durch Behandlung von Azamethinverbindungen der Formel (1), in der R Wasserstoff ist, mit einer anorganischen Säure z.B. Schwefelsäure oder Phosphorsäure, und bei erhöhter Temperatur z.B. von 50 bis 100 °C erhalten werden.

Die Azamethinverbindungen der Formeln (1) bis (4) sind normalerweise farblos oder höchstens schwach gefärbt. Wenn diese sublimationsechten Farbbildner mit einem vorzugsweise sauren Entwickler, d.h. einem Elektronenakzeptor, in Kontakt gebracht werden, so ergeben sie intensive gelbe oder orange Farbtöne, die ausgezeichnet lichtecht sind. Sie sind deshalb auch sehr wertvoll im Gemisch mit einem oder mehreren anderen bekannten Farbbildnern, z.B. 3,3-(Bis-aminophenyl)-phthaliden, 3-Indolyl-3-aminophenylazaphthaliden, 3,3-(Bis-indolyl)-phthaliden, 3-Aminofluoranen, 2,6-Diaminofluoranen, Leukoauraminen, Spiropyranen, Spirodipyranen, Phenoxazinen, Phenothiazinen, Carbazolylmethanen, weiteren Triarylmethan-leukofarbstoffen, um grüne, marine-blaue, graue oder schwarze Färbungen zu ergeben.

Die Azamethinverbindungen der Formeln (1) bis (4) zeigen sowohl auf phenolischen Unterlagen, wie auch besonders auf Tonen und substituierten Zinksalicylaten eine ausgezeichnete Farbintensität und Lichtechtheit. Sie eignen sich vor allem als Farbbildner für die Verwendung in einem wärmeempfindlichen oder insbesondere druckempfindlichen Aufzeichnungsmaterial, das sowohl Kopier- als auch Registriermaterial sein kann. Sie zeichnen sich dadurch aus, dass sie eine hohe Sublimationsechtheit und durch Belichtung im CB-Blatt eine geringe Abnahme der Farbstärke (CB-Desaktivierung) aufweisen.

Ein druckempfindliches Material besteht beispielsweise aus mindesfens einem Paar von Blättern, die mindestens einen Farbbildner der Formeln (1) bis (4) gelöst in einem organischen Lösungsmittel und einen Elektronenakzeptor als Entwickler enthalten.

Typische Beispiele für solche Entwickler sind Aktivton-Substanzen, wie Attapulgus-Ton, Säureton, Bentonit, Montmorillonit, aktivierter Ton, wie z.B. säureaktiviertes Bentonit oder Montmorillonit, ferner Zeolith, Halloysit, Siliciumdioxyd, Aluminiumoxid, Aluminiumsulfat, Aluminiumphosphat, Zinkchlorid, Zinknitrat, Kaolin oder irgendein beliebiger Ton oder sauer reagierende, organische Verbindungen, wie z.B. gegebenenfalls ringsubstituierte Phenole, Salicylsäure oder Salicylsäureester und deren Metallsalze, ferner ein sauer reagierendes, polymeres Material, wie z.B. ein phenolisches Polymerisat, ein Alkylphenolacetylenharz, ein Maleinsäure-Kolophonium-Harz oder ein teilweise oder vollständig hydrolysiertes Polymerisat von Maleinsäureanhydrid mit Styrol, Ethylen oder Vinylmethylether, oder Carboxypolymethylen. Es können auch Mischungen der genannten polymeren Verbindungen eingesetzt werden. Bevorzugte Entwickler sind säureaktiviertes Bentonit, Zinksalicylate oder die Kondensationsprodukte von p-substituierten Phenolen mit Formaldehyd. Die letzteren können auch Zink enthalten.

Die Entwickler können zusätzlich auch mit an sich unreaktiven oder wenig reaktiven Pigmenten oder weiteren Hilfsstoffen wie Kieselgel oder UV-Absorbern, wie z.B. 2-(2-Hydroxyphenyl)-benzotriazolen gemischt eingesetzt werden. Beispiele für solche Pigmente sind:

Talk, Titandioxid, Zinkoxid, Kreide; Tone wie Kaolin, sowie organische Pigmente, z.B. Harnstoff-Formaldehyd-Kondensate (BET-Oberfläche 2-75 $m^2/g$) oder Melamin-Formaldehyd-Kondensationsprodukte.

Der Farbbildner liefert an den Punkten, an denen er mit dem Elektronenakzeptor in Kontakt kommt, eine gefärbte Markierung. Um eine frühzeitige Aktivierung der in dem druckempfindlichen Aufzeichnungsmaterial vorhandenen Farbbildner zu verhindern, werden diese in der Regel von dem Elektronenakzeptor getrennt. Dies kann zweckmässig erzielt werden, indem man die Farbbildner in schaum-, schwamm- oder bienenwabenartigen Strukturen einarbeitet. Vorzugsweise sind die Farbbildner in Mikrokapseln eingeschlossen, die sich in der Regel durch Druck zerbrechen lassen.

Beim Zerbrechen der Kapseln durch Druck, beispielsweise mittels eines Bleistiftes wird die Farbbildnerlösung auf ein benachbartes, mit einem Elektronenakzeptor beschichtetes Blatt übertragen, wodurch eine farbige Stelle erzeugt wird. Die Farbe resultiert aus dem dabei gebildeten Farbstoff, der im sichtbaren Bereich des elektromagnetischen Spektrums absorbiert.

Die Farbbildner werden vorzugsweise in Form von Lösungen in organischen Lösungsmitteln eingekapselt. Beispiele für geeignete Lösungsmittel sind vorzugsweise nichtflüchtige Lösungsmittel, z.B. polyhalogeniertes Paraffin oder Diphenyl, wie Chlorparaffin, Monochlordiphenyl oder Trichlordiphenyl, ferner Tricresylphosphat, Di-n-butylphthalat, Dioctylphthalat, Trichlorbenzol Trichlorethylphosphat, aromatische Ether, wie Benzylphenylether, Kohlenwasserstofföle, wie Paraffin oder Kerosin, z.B. mit Isopropyl, Isobutyl, sek.Butyl oder tert.Butyl alkylierte Derivate von Diphenyl, Napthalin oder Terphenyl, Dibenzyltoluol, Terphenyl, partiell hydriertes Terphenyl, mono-, bis-, tetramethylierte Diphenylalkane, benzylierte Xylole, oder weitere chlorierte oder hydrierte, kondensierte, aromatische Kohlenwasserstoffe. Oft werden Mischungen verschiedener Lösungsmittel, insbesondere Mischungen aus Dodecylbenzol, Paraffinölen oder Kerosin und Diisopropylnaphthalin oder partiell hydriertem Terphenyl, eingesetzt, um eine optimale Löslichkeit für die Farbbildner, eine rasche und intensive Färbung und eine für die Mikroverkapselung günstige Viskosität zu erreichen.

Die Kapselwände können durch Koazervationskräfte gleichmässig um die Tröpfchen der Farbbildnerlösung herum gebildet werden, wobei das Einkapselungsmaterial z.B. aus Gelatine und Gummi arabicum bestehen kann, wie dies z.B. in der US-Patentschrift 2 800 457 beschrieben ist. Die Kapseln können vorzugsweise auch aus einem Aminoplast oder modifizierten Aminoplasten durch Polykondensation gebildet werden, wie es in den britischen Patentschriften 989,264, 1 156 725, 1 301 052 und 1 355 124 beschrieben ist. Ebenfalls geeignet sind Mikrokapseln, welche durch Grenzflächenpolymerisation gebildet werden, wie z.B. Kapseln aus Polyester, Polycarbonat, Polysulfonamid, Polysulfonat, besonders aber aus Polyamid oder Polyurethan.

Die Farbbildner der Formel (1) enthaltenden Mikrokapseln können zur Herstellung von druckempfindlichen Kopiermaterialien der verschiedensten bekannten Arten verwendet werden. Die verschiedenen Systeme unterscheiden sich im wesentlichen voneinander durch die Anordnung der Kapseln, der Farbreaktanten und durch das Trägermaterial. Bevorzugt wird eine Anordnung, bei der der eingekapselte Farbbildner in Form einer Schicht auf der Rückseite eines Uebertragungsblattes und der Elektronenakzeptor in Form einer Schicht auf der Vorderseite eines Empfangsblattes vorhanden sind.

Eine andere Anordnung der Bestandteile besteht darin, dass die den Farbbildner enthaltenden Mikrokapseln und der Entwickler in oder auf dem gleichen Blatt in Form einer oder mehrerer Einzelschichten oder in der Papierpulpe vorliegen.

Die Kapseln werden vorzugsweise mittels eines geeigneten Binders auf dem Träger befestigt. Da Papier das bevorzugte Trägermaterial ist, handelt es sich bei diesem Binder hauptsächlich um Papierbeschichtungsmittel, wie Gummi arabicum, Polyvinylalkohol, Hydroxymethylcellulose, Casein, Methylcellulose, Dextrin, Stärke oder Stärkederivate oder Polymerlatices. Letzere sind beispielsweise gegebenenfalls carboxylierte Butadien-Styrolcopolymerisate oder Acrylhomo- oder -copolymere.

Als Papier werden nicht nur normale Papiere aus Cellulosefasern, sondern auch Papiere, in denen die Cellulosefasern (teilweise oder vollständig) durch Fasern aus synthetischen Polymerisaten ersetzt sind,

verwendet.

Die Verbindungen der Formeln (1) bis (4) können auch als Farbbildner in einem thermoreaktiven Aufzeichnungsmaterial verwendet werden. Dieses enthält in der Regel mindestens einen Schichtträger, einen Farbbildner, einen Elektronenakzeptor und gegebenenfalls auch ein Bindemittel und/oder Wachs.

Thermoreaktive Aufzeichnungssysteme umfassen z.B. wärmeempfindliche Aufzeichnungs- und Kopiermaterialien und -papiere. Diese Systeme werden beispielsweise zum Aufzeichnen von Informationen, z.B. in elektronischen Rechnern, Ferndruckern, Fernschreibern oder in Aufzeichnungsgeräten und Messinstrumenten, wie z.B. Elektrocardiographen, verwendet. Die Bilderzeugung (Markierung) kann auch manuell mit einer erhitzten Feder erfolgen. Eine weitere Einrichtung der Erzeugung von Markierungen mittels Wärme sind Laserstrahlen.

Das thermoreaktive Aufzeichnungsmaterial kann so aufgebaut sein, dass der Farbbildner in einer Bindemittelschicht gelöst oder dispergiert ist und in einer zweiten Schicht der Entwickler in dem Bindemittel gelöst und dispergiert ist. Eine andere Möglichkeit besteht darin, dass sowohl der Farbbildner als auch der Entwickler in einer Schicht dispergiert sind. Das Bindemittel wird in spezifischen Bezirken mittels Wärme erweicht und an diesen Punkten, an denen Wärme angewendet wird, kommt der Farbbildner mit dem Elektronenakzeptor in Kontakt und es entwickelt sich sofort die erwünschte Farbe.

Als Entwickler eignen sich die gleichen Elektronenakzeptoren, wie sie in druckempfindlichen Papieren verwendet werde. Beispiele für Entwickler sind die bereits erwähnten Tonminerale und Phenolharze, oder auch phenolische Verbindungen, wie sie beispielsweise in der DE-PS 12 51 348 beschrieben sind, z.B. 4-tert.Butylphenol, 4-Phenylphenol, Methylen-bis(p-phenylphenol), 4-Hydroxydiphenylether, α-Naphthol, β-Naphthol, 4-Hydroxy-diphenylsulfon, 4-Hydroxy-4′-methyl-diphenylsulfon, 4-Hydroxy-4′-isopropoxy-diphenylsulfon, 4-Hydroxybenzoesäuremethylester oder -benzylester, 4-Hydroxyacetophenon, 2,2′-Dihydroxydiphenyl, 4,4′-Cyclohexylidendiphenol, 4,4′-Isopropylidendiphenol, 4,4′-Isopropyliden-bis-(2-methylphenol), ein Antipyrinkomplex von Zinkthiocyanat, ein Pyridinkomplex von Zinkthiocyanat, 4,4′-Bis-(hydroxyphenyl)-valeriansäure, Hydrochinon, Pyrogallol, Phloroglucin, p-, m-, o-Hydroxybenzoesäure, Gallussäure, 1-Hydroxy-2-naphthoesäure sowie Borsäure und organische, vorzugsweise aliphatische Dicarbonsäuren, wie z.B. Weinsäure, Oxalsäure, Maleinsäure, Zitronensäure, Citraconsäure oder Bernsteinsäure.

Vorzugsweise werden zur Herstellung des thermoreaktiven Aufzeichnungsmaterials schmelzbare, filmbildende Bindemittel verwendet. Diese Bindemittel sind normalerweise wasserlöslich, während die Azamethinverbindungen und der Entwickler in Wasser schwer löslich oder unlöslich sind. Das Bindemittel sollte in der Lage sein, den Farbbildner und den Entwickler bei Raumtemperatur zu dispergieren und zu fixieren.

Bei Einwirkung von Wärme erweicht oder schmilzt das Bindemittel, so dass der Farbbildner mit dem Entwickler in Kontakt kommt und sich eine Farbe bilden kann. Wasserlösliche oder mindestens in Wasser quellbare Bindemittel sind z.B. hydrophile Polymerisate, wie Polyvinylalkohol, Polyacrylsäure, Hydroxyethylcellulose, Methylcellulose, Carboxymethylcellulose, Polyacrylamid, Polyvinylpyrrolidon, carboxylierte Butadien-styrolcopolymerisate, Gelatine, Stärke oder veretherte Maisstärke.

Wenn der Farbbildner und der Entwickler in zwei getrennten Schichten vorliegen, können in Wasser unlösliche Bindemittel, d.h. in nicht polaren oder nur schwach polaren Lösungsmitteln lösliche Bindemittel, wie z.B. Naturkautschuk, synthetischer Kautschuk, chlorierter Kautschuk, Polystyrol, Styrol/Butadien-Mischpolymerisate, Polymethylacrylate, Ethylcellulose, Nitrocellulose z.B. Polyvinylcarbazol, verwendet werden. Die bevorzugte Anordnung ist jedoch diejenige, bei der der Farbbildner und der Entwickler in einer Schicht in einem wasserlöslichen Bindemittel enthalten sind.

Die thermoreaktiven Schichten können weitere Zusätze enthalten. Zur Verbesserung des Weissgrades, zur Erleichterung des Bedruckens der Papiere und zur Verhinderung des Festklebens der erhitzten Feder können diese Schichten, z.B. Talk, Titandioxyd, Zinkoxyd, Aluminiumoxid, Aluminiumhydroxyd, Calciumcarbonat, Tone oder auch organische Pigmente, wie z.B. Harnstoff-Formaldehydpolymerisate, enthalten. Um zu bewirken, dass nur innerhalb eines begrenzten Temperaturbereichs die Farbe gebildet wird, können Substanzen, wie Harnstoff, Thioharnstoff, Diphenylthioharnstoff, Acetamid, Acetanilid, Benzolsulfanilid, Bis-stearoyl-ethylendiamid, Stearinsäureamid, Phthalsäureanhydrid, Metallstearate, wie z.B. Zinkstearate, Phthalsäurenitril, Dimethylterephthalat oder andere entsprechende, schmelzbare Produkte, welche das gleichzeitige Schmelzen des Farbbildners und des Entwicklers induzieren, zugesetzt werden. Bevorzugt enthalten thermographische Aufzeichnungsmaterialien Wachse, z.B. Carnaubawachs, Montanwachs, Paraffinwachs, Polyethylenwachs, Kondensate höherer Fettsäureamide und Formaldehyd und Kondensate höherer Fettsäuren und Ethylendiamin.

Eine weitere Anwendung der Verbindungen der Formeln (1) bis (4) ist die Herstellung eines Farbbildes mittels photohärtbarer Mikrokapseln, wie sie z.B. in der DE-OS 3 247 488 beschrieben wird.

In den folgenden Herstellungs- und Anwendungsbeispielen beziehen sich die angegebenen Prozentsätze, wenn nichts anderes angegeben ist, auf das Gewicht und Teile sind Gewichtsteile.

Beispiel 1: 15,9 g 2,3,3-Trimethylindolenin werden in 50 g Essigsäure 100 % und 1 g Salzsäure 30 % bei 45 ° C gelöst. Man gibt 10 g Acrylamid zu und erwärmt unter Rühren auf 110 ° C, worauf die Reaktionsmischung 5 Stunden bei dieser Temperatur gehalten wird. Alsdann wird die entstandene dunkelrote Lösung auf 200 g Wasser gegossen und mit 120 ml 10-N-Natriumhydroxid-Lösung auf einen pH-Wert von 10 eingestellt. Hierauf wird der Niederschlag mit Essigester extrahiert. Nach Abdestillieren des Lösungsmittels erhält man 15 g einer Verbidnung der Formel.

(i) 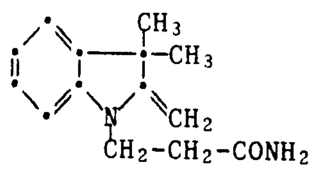

15 g dieser Verbindung der Formel (i) werden in 105 g Essigsäure 80 % gelöst und in einer Stunde bei 0-5 ° C mit 6,5 g diazotiertem Anilin gekuppelt. Nach einer weiteren Stunde Rühren bei 10 ° C wird mit 200 ml Wasser verdünnt und der pH-Wert durch Zugabe von 105 ml 10N-Natriumhydroxidlösung auf 4,8 gestellt. Bei 20-25 ° C kristallisiert das Produkt aus. Nach Abfiltrieren und Umkristallisation aus Ethanol erhält man 11 g Produkt der Formel

(ii) 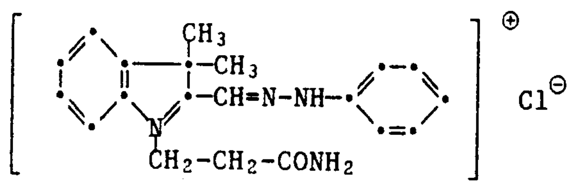

Schmelzpunkt 247-248 ° C.

6,1 g der Verbindung der Formel (ii) werden bei 40 ° C in 100 ml Wasser angeschlämmt und mit 11,4 g Dimethylsulfat versetzt. Hierauf wird die Mischung 15 Stunden bei 30-40 ° C gerührt, wobei durch Zutropfen von 10 ml 10N-Natriumhydroxidlösung der pH-Wert bei 7-8 gehalten wird. Man steigert den pH-Wert auf 12 und filtriert das ausgefallene Produkt ab. Nach Umkristallisieren aus Toluol erhält man 3,0 g einer Verbindung der Formel

(11) 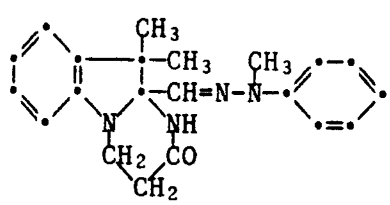

Schmelzpunkt: 223-225 ° C.

Dieser Farbbildner entwickelt auf Säureton, Phenolharz oder Zinksalicylat eine lichtechte, gelbe Farbe.

Beispiel 2: 3,7 g der Verbindung der Formel (ii) werden mit 30 g Toluol und 1 g Magnesiumoxid bei 80 ° C angeschlämmt und mit 2,5 g Benzylchlorid versetzt. Man erwärmt auf 110 ° C und rührt dieser Temperatur während 5 Stunden. Durch Zugabe von 40 g Methanol fällt das Produkt aus, worauf es abfiltriert und aus Isopropylalkohol umkristallisiert wird. Man erhält 0,4 g eines Farbbildners der Formel

(12) 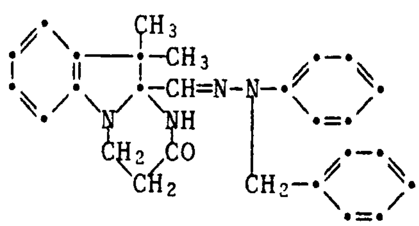

Schmelzpunkt: 223-225 ° C

Dieser in Kapselöl gut lösliche Farbbildner entwickelt auf Säureton, Phenolharz oder Zinksalicylat eine lichtechte gelbe Farbe.

Auf gleiche Weise wie in den Beispielen 1 und 2 beschrieben, erhält man unter Verwendung der entsprechenden Ausgangsstoffe die in der folgenden Tabelle aufgeführten Azamethinverbindungen der Formel

(13) 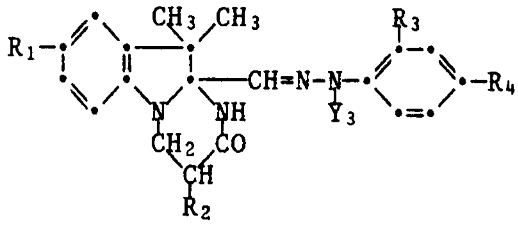

Tabelle

| Bsp. | $R_1$ | $R_2$ | $Y_3$ | $R_3$ | $R_4$ | Smp. in °C | Farbe auf Säureton |
|---|---|---|---|---|---|---|---|
| 3 | H | $CH_3$ | $CH_3$ | H | H | 212-215 | gelb |
| 4 | H | H | $CH_3$ | H | $-n-C_{12}H_{25}$ | 110-165 | gelb |
| 5 | H | H | $CH_3$ | H | Cl | 265-266 | gelb |
| 6 | Cl | H | $CH_3$ | H | H | 249-250 | gelb |
| 7 | H | H | $CH_3$ | H | $-O-CH_2-CH_2$<br>$C_3H_7-O$ | 186-188 | rotstichig gelb |
| 8 | H | H | $CH_3$ | $CH_3$ | $CH_3$ | 195-196 | grünstichig gelb |
| 9 | H | H | $CH_3$ | H | $CH_3$ | 227-229 | gelb |
| 10 | H | H | $-n-C_8H_{17}$ | H | H | 165-166 | gelb |
| 11 | H | H | $-n-C_8H_{17}$ | H | Cl | 168-171 | gelb |
| 12 | H | $CH_3$ | $-n-C_8H_{17}$ | H | H | 152-154 | gelb |
| 13 | H | H | $-CH_2CH=CH_2$ | H | H | 208-209 | gelb |
| 14 | Cl | H | $CH_3$ | H | $-n-C_{12}H_{25}$ | 160-161 | gelb |

Beispiel 15: Herstellung eines druckempfindlichen Kopierpapiers Eine Lösung von 3 g der Azamethinverbindung der Forml (12) in 80 g Di-Isopropylnaphthalin und 17 g Kerosin wird auf an sich bekannte Weise mit Gelatine und Gummi arabicum durch Koazervation mikroverkapselt, mit Stärkelösung vermischt und auf ein Blatt Papier gestrichen. Ein zweites Blatt Papier wird auf der Frontseite mit säureaktiviertem Bentonit als Farbentwickler beschichtet. Das erste, den Farbbildner enthaltende Blatt und das mit Farbentwickler beschichtete Papier werden mit den Beschichtungen benachbart aufeinandergelegt. Durch Schreiben mit der Hand oder mit der Schreibmaschine auf dem ersten Blatt wird Druck ausgeübt, und es entwickelt sich sofort auf dem mit dem Entwickler beschichteten Blatt eine intensive gelbe Kopie, die ausgezeichnet sublimier- und lichtecht ist.

Entsprechende intensive, sublimier- und lichtechte gelbe Kopien werden auch bei Verwendung des Farbbildners der Formel (11) oder der Farbbildner gemäss den Beispielen 3 bis 14 erzielt.

Beispiel 16: Ersetzt man in Beispiel 15 die Azamethinverbindung der Formel (12) durch eine Mischung der folgenden Zusammensetzung 1,2 g 3,3-Bis-(4'-dimethylaminophenyl)-6-dimethylaminophthalid,1,2 g N-Butylcarbazol-3-yl-bis-(4'-N-methyl-N-phenylaminophenyl-)-methan 1,2 g der Azamethinverbindung der Formel (11) und 0,4 g 3,3-Bis-(N-octyl-2'methylindol-3'-yl-)phthalid und verfährt im übrigen wie in Beispiel 15 beschrieben, so erhält man ein druckempfindliches Aufzeichnungsmaterial, welches durch Schreiben mit der Hand oder mit der Schreibmaschine eine intensive und lichtechte schwarze Kopie ergibt.

Beispiel 17: 1 g der Azamethinverbindung der Formel (12) wird in 17 g Toluol gelöst. Zu dieser Lösung gibt man unter Rühren 12 g Polyvinylacetat, 8 g Calciumcarbonat und 2 g Titandioxyd. Die erhaltene Suspension wird im Gewichtsverhältnis 1:1 mit Toluol verdünnt und mit einem 10 µm Rakel auf ein Blatt Papier gestrichen. Auf dieses Blatt Papier wird ein zweites Blatt Papier gelegt, dessen Unterseite bei einem Auftragsgewicht von 3 g/m$^2$ mit einer Mischung bestehend aus 1 Teil eines Amidwachses, 1 Teil eines Stearinwachses und 1 Teil Zinkchlorid beschichtet worden ist. Durch Schreiben mit der Hand oder mit der Schreibmaschine auf dem oberen Blatt wird Druck ausgeübt, und es entwickelt sich sofort auf dem mit den Farbbildner beschichteten Blatt, eine intensive, sublimier- und lichtechte gelbe Farbe.

Beispiel 18: Herstellung eines wärmeempfindlichen Aufzeichnungsmaterials In einer Kugelmühle werden 32 g 4,4'-Isopropylidendiphenol (Bisphenol A), 3,8 g Distearylamid des Ethylendiamins, 39 g Kaolin, 20 g eines zu 88 % hydrolysierten Polyvinylakohols und 500 ml Wasser gemahlen bis die Teilchengrössse ca 5 µm beträgt. In einer zweiten Kugelmühle werden 6 g der Azamethinverbindung der Formel (11), 3 g eines zu 88 % hydrolysierten Polyvinylalkohols und 60 ml Wasser zu einer Teilchengrösse von ca. 3 µm gemahlen.

Die beiden Dispersionen werden zusammngegeben und mit einem Trockenauftragsgewicht von 5,5 g/m$^2$ auf ein Papier gestrichen. Durch Berührung des Papiers mit einem erhitzten Metallstift wird eine intensive gelbe Farbe erhalten, die eine ausgezeichnete Sublimier-und Lichtechtheit hat.

Intensive und lichtechte gelbe Farben werden auch bei Verwendung des Farbbildners der Formel (12) oder der Farbbildner gemäss Beispielen 3 bis 14 erhalten.

## Patentansprüche

**1.** Chromogene polycyclische Azamethinverbindungen der Formel

(1) 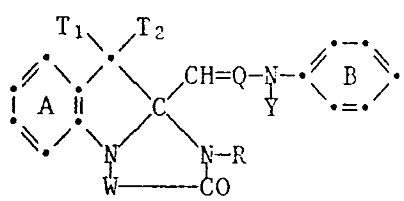 ,

worin $T_1$ und $T_2$ Niederalkyl, Cycloalkyl, Benzyl oder zusammen Alkylen,
Q N
W Alkylen, Alkenylen, 1,2-Cycloalkylen oder 1,2-Arylen,
R Wasserstoff, Niederalkyl, Aryl oder Aralkyl, und
y unsubstituiertes oder durch Halogen, Hydroxyl, Cyano oder Niederalkoxy substituiertes Alkyl oder Alkenyl mit höchstens 12 Kohlenstoffatomen oder Aralkyl bedeuten und der Ring A unsubstituiert oder durch Halogen, Cyano, Hydroxyl, Niederalkyl, Niederalkoxy, Niederalkylcarbonyl, Niederalkylcarbonyloxy, Niederalkylamino, Diniederalkylamino oder Niederalkylcarbonylamino und der Ring B unsubstituiert oder durch Halogen, Cyano, $C_1$-$C_{12}$-Alkyl, $C_1$-$C_{12}$-Alkoxy, $C_2$-$C_{12}$-Alkoxyalkyl, $C_2$-$C_{12}$-Alkoxyalkoxy oder Aralkoxy substituiert ist.

**2.** Azamethinverbindungen gemäss Anspruch 1, dadurch gekennzeichnet, dass in Formel (1) $T_1$ und $T_2$ je Niederalkyl und vorzugsweise Methyl bedeuten.

**3.** Azamethinverbindungen gemäss einem der Ansprüche 1 und 2, dadurch gekennzeichnet, dass in Formel (1) der Ring A unsubstituiert oder durch Halogen, Cyano, Methyl oder Methoxy substituiert ist.

**4.** Azamethinverbindungen gemäss einem der Ansprüche 1 bis 3, dadurch gekennzeichnet, dass in Formel (1) W Methylen, Ethylen, Isopropylen, 1,2-Cyclohexylen oder 1,2-Phenylen bedeutet.

**5.** Azamethinverbindungen gemäss einem der Ansprüche 1 bis 4, dadurch gekennzeichnet, dass in Formel (1) R Wasserstoff bedeutet.

6. Azamethinverbindungen gemäss einem der Ansprüche 1 bis 5, dadurch gekennzeichnet, dass in Formel (1) Y Methyl, Ethyl, Allyl, Octyl oder Benzyl bedeutet.

7. Azamethinverbindungen gemäss Anspruch 1, dadurch gekennzeichnet, dass sie der Formel

(2) 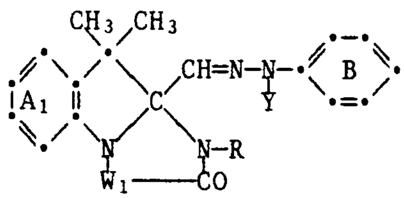

entsprechen, worin der Ring $A_1$ unsubstituiert oder durch Halogen, Cyano, Niederalkyl oder Niederalkoxy substituiert ist,
$W_1$ Ethylen, Isopropylen, 1,2-Cyclohexylen oder 1,2-Phenylen bedeutet und R, Y und B die in Anspruch 1 angegebene Bedeutung haben.

8. Azamethinverbindungen gemäss Anspruch 7, dadurch gekennzeichnet, dass in Formel (2) der Ring $A_1$ unsubstituiert oder durch Halogen, Niederalkyl oder Niederalkoxy substituiert ist.

9. Azamethinverbindungen gemäss Anspruch 1 oder 7, dadurch gekennzeichnet, dass sie der Formel

(3) 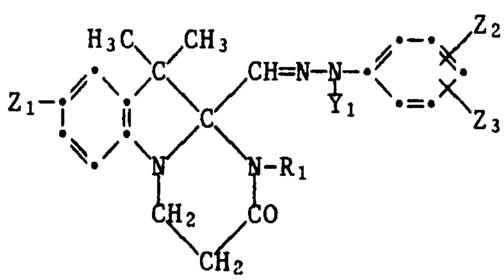

entsprechen, worin
- $R_1$ Wasserstoff, Niederalkyl, Phenyl oder Chlorphenyl,
- $Y_1$ $C_1$-$C_8$-Alkyl, Allyl, Benzyl oder Phenethyl,
- $Z_1$ Wasserstoff, Halogen, $C_1$-$C_3$-Alkoxy oder $C_1$-$C_4$-Alkyl,
- $Z_2$ Wasserstoff, Cyano, Halogen, $C_1$-$C_5$-Alkoxy, $C_2$-$C_8$-Alkoxyalkoxy oder $C_1$-$C_{12}$-Alkyl und
- $Z_3$ Wasserstoff,Halogen, $C_1$-$C_5$-Alkyl oder $C_1$-$C_5$-Alkoxy

bedeuten.

10. Azamethinverbindungen gemäss Anspruch 9, dadurch gekennzeichnet, dass sie der Formel

(4) 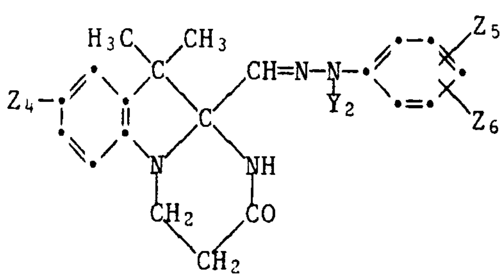

entsprechen, worin
- $Y_2$ Methyl, Ethyl, n-Octyl, Allyl oder Benzyl,
- $Z_4$ Wasserstoff oder Chlor,
- $Z_5$ Wasserstoff, Chlor, $C_1$-$C_4$-Alkoxy, $C_1$-$C_{12}$-Alkyl oder $C_2$-$C_8$-Alkoxy-alkoxy und
- $Z_6$ Wasserstoff, Chlor oder Methyl

bedeuten.

**11.** Verfahren zur Herstellung von Azamethinverbindungen der Formel (1) gemäss Anspruch 1, dadurch gekennzeichnet, dass man ein quaternäres Anmoniumsalz der Formel

(5) 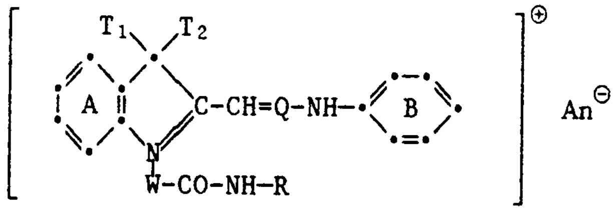

worin

$An^{\ominus}$ ein Anion einer starken anorganischen oder organischen Säure bedeutet und

A, B, Q, R, $T_1$, $T_2$ und W die in Anspruch 1 angegebene Bedeutung haben, mit einem den Rest Y einführenden Alkylierungsmittel, das gegebenenfalls durch einen Arylrest substituiert ist, umsetzt und die erhaltene Verbindung zur polycyclischen Azamethinverbindung der Formel (1) cyclisiert.

**12.** Verwendung einer Azamethinverbindung der in einem der Ansprüche 1 bis 10 angegebenen Formel als Farbbildner in einem druckempfindlichen oder wärmeempfindlichen Aufzeichungsmaterial.

**13.** Druck- oder wärmeempfindliches Aufzeichnungsmaterial, dadurch gekennzeichnet, dass es in seinem Farbreaktantensystem als Farbbildner mindestens eine Azamethinverbindung der in einem der Ansprüche 1 bis 10 angegebenen Formel enthält.

**14.** Druckempfindliches Aufzeichnungsmaterial gemäss Anspruch 13, dadurch gekennzeichnet, dass es die Azamethinverbindung, gelöst in einem organischen Lösungsmittel, und mindestens einen festen Elektronenakzeptor enthält.

**15.** Druckempfindliches Aufzeichnungsmaterial gemäss einem der Ansprüche 13 und 14, dadurch gekennzeichnet, dass die Azamethinverbindung in Mikrokapseln eingekapselt ist.

**16.** Druckempfindliches Aufzeichnungsmaterial gemäss Anspruch 15, dadurch gekennzeichnet, dass die eingekapselte Azamethinverbindung in Form einer Schicht auf der Rückseite eines Uebertragungsblattes und der Elektronenakzeptor in Form einer Schicht auf der Vorderseite des Empfangsblattes vorhanden sind.

**17.** Druckempfindliches Aufzeichnungsmaterial gemäss einem der Ansprüche 13 bis 16, dadurch gekennzeichnet, dass die Azamethinverbindung gemeinsam mit eines oder mehreren anderen Farbbildnern enthalten ist.

**18.** Wärmeemfpindliches Aufzeichnungsmaterial gemäss Anspruch 13, dadurch gekennzeichnet, dass es in mindestens einer Schicht mindestens einen Farbbildner, einen Elektronenakzeptor und gegebenenfalls ein Bindemittel enthält, worin der Farbbildner die in einem der Ansprüche 1 bis 10 angegebenen Formel hat.

## Claims

**1.** A chromogenic polycyclic azamethine compound of formula

(1) 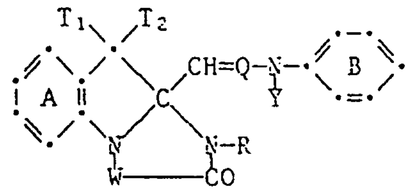 ,

wherein

T1 and T2 are lower alkyl, cycloalkyl, benzyl or together are alkylene,

Q is N,

W is alkylene, alkenylene, 1,2-cycloalkylene or 1,2-arylene,

R is hydrogen, lower alkyl, aryl or aralkyl, and

Y is alkyl or alkenyl of not more than 12 carbon atoms, each unsubstituted or substituted by halogen, hydroxyl, cyano or lower alkoxy, or is aralkyl,

and the ring A is unsubstituted or substituted by halogen, cyano, hydroxyl, lower alkyl, lower alkoxy, lower alkylcarbonyl, lower alkylcarbonyloxy, lower alkylamino, di-lower alkylamino or lower alkylcarbonylamino, and the ring B is unsubstituted or substituted by halogen, cyano, $C_1$-$C_{12}$alkyl, $C_1$-$C_{12}$alkoxy, $C_2$-$C_{12}$alkoxyalkyl, $C_2$-$C_{12}$alkoxyalkoxy or aralkoxy.

**2.** An azamethine compound according to claim 1, wherein in formula (1) $T_1$ and $T_2$ are each lower alkyl and preferably methyl.

**3.** An azamethine according to either of claims 1 and 2, wherein in formula (1) the ring A is unsubstituted or is substituted by halogen, cyano, methyl or methoxy.

**4.** An azamethine compound according to any of claims 1 to 3, wherein in formula (1) W is methylene, ethylene, isopropylene, 1,2-cyclohexylene or 1,2-phenylene.

**5.** An azamethine compound according to any of claims 1 to 4, wherein in formula (1) R is hydrogen.

**6.** An azamethine compound according to any of claims 1 to 5, wherein in formula (1) Y is methyl, ethyl, allyl, octyl or benzyl.

**7.** An azamethine compound according to claim 1, of formula

(2) 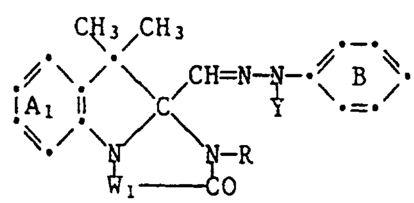

wherein the ring $A_1$ is unsubstituted or is substituted by halogen, cyano, lower alkyl or lower alkoxy, $W_1$ is ethylene, isopropylene, 1,2-cyclohexylene or 1,2-phenylene, and R, Y and B are as defined in claim 1.

**8.** An azamethine compound according to claim 7, wherein in formula (2) the ring $A_1$ is unsubstituted or is substituted by halogen, lower alkyl or lower alkoxy.

**9.** An azamethine compound according to claim 1 or 7, of formula

(3) 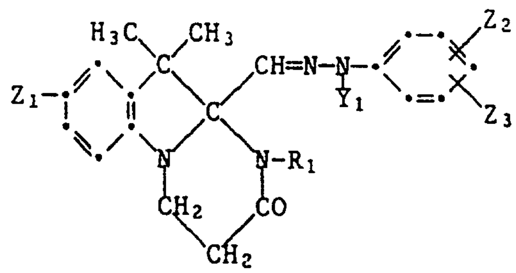

wherein

- $R_1$ is hydrogen, lower alkyl, phenyl or chlorophenyl,
- $Y_1$ is $C_1$-$C_8$alkyl, allyl, benzyl or phenethyl,
- $Z_1$ is hydrogen, halogen, $C_1$-$C_3$alkoxy or $C_1$-$C_4$alkyl,
- $Z_2$ is hydrogen, cyano, halogen, $C_1$-$C_5$alkoxy, $C_2$-$C_8$alkoxyalkoxy or $C_1$-$C_{12}$alkyl, and
- $Z_3$ is hydrogen, halogen, $C_1$-$C_5$alkyl or $C_1$-$C_5$alkoxy.

**10.** An azamethine compound according to claim 9, of formula

(4) 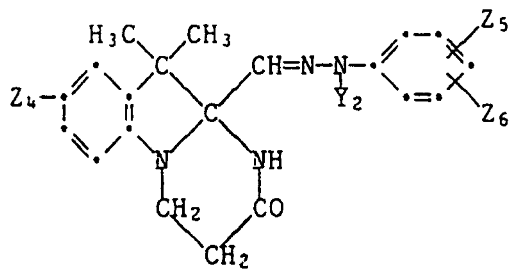

wherein

- $Y_2$ is methyl, ethyl, n-octyl, allyl or benzyl,
- $Z_4$ is hydrogen or chlorine,
- $Z_5$ is hydrogen, chlorine, $C_1$-$C_4$alkoxy, $C_1$-$C_{12}$alkyl or $C_2$-$C_8$alkoxyalkoxy and
- $Z_6$ is hydrogen, chlorine or methyl.

**11.** A process for the preparation of an azamethine compound of formula (1) as defined in claim 1, which comprises reacting a quaternary ammonium salt of formula

(5) 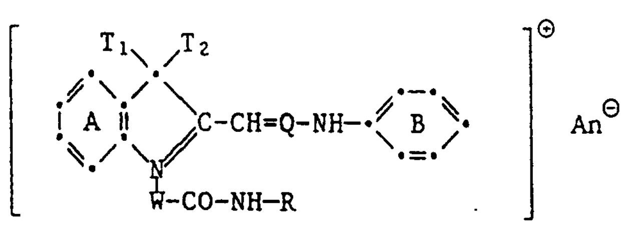

wherein $An^{\ominus}$ is the anion of a strong inorganic or organic acid and A, B, Q, R, $T_1$, $T_2$ and W are as defined in claim 1, with an alkylating agent that may be substituted by an aryl radical and that introduces the radical Y and cyclising the resultant compound to the polycyclic azamethine compound of formula (1).

**12.** The use of an azamethine compound of a formula indicated in any of claims 1 to 10 as a colour former in a pressure-sensitive or heat-sensitive recording material.

**13.** A pressure-sensitive or heat-sensitive recording material which comprises in its colour reactant system, as colour former, at least one azamethine compound of a formula indicated in any of claims 1 to 10.

**14.** A pressure-sensitive recording material according to claim 13, which comprises the azamethine compound dissolved in an organic solvent, and comprises at least one solid electron acceptor.

**15.** A pressure-sensitive recording material according to either of claims 13 and 14, wherein the azamethine compound is encapsulated in microcapsules.

**16.** A pressure-sensitive recording material according to claim 15, wherein the encapsulated azamethine compound is present in the form of a layer on the back of a transfer sheet and the electron acceptor is present in the form of a layer on the face of the receiving sheet.

**17.** A pressure-sensitive recording material according to any of claims 13 to 16, which comprises the azamethine compound together with one or more other colour formers.

**18.** A heat-sensitive recording material according to claim 13, which comprises in at least one layer at least one colour former, one electron acceptor and possibly a binder, the colour former having a formula indicated in any of claims 1 to 10.

**Revendications**

**1.** Composés azaméthines polycycliques chromogènes, de formule :

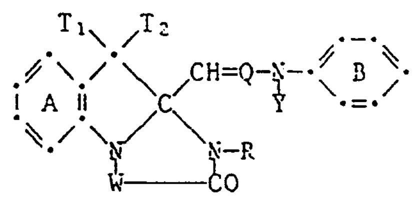

(1)

dans laquelle $T_1$ et $T_2$ représentent chacun un groupe alkyle inférieur, cycloalkyle ou benzyle, ou forment ensemble un groupe alkylène, Q représente un atome d'azote, W représente un groupe alkylène, alcénylène, 1,2-cycloalkylène ou 1,2-arylène, R représente un atome d'hydrogène ou un groupe alkyle inférieur, aryle ou aralkyle, Y représente un groupe alkyle ou alcényle, ayant au plus 12 atomes de carbone, non-substitué ou substitué par un atome d'halogène ou un groupe hydroxyle, cyano ou alcoxy inférieur, ou un groupe aralkyle, le noyau A est non-substitué ou substitué par un ou plusieurs substituants pris parmi les atomes d'halogène et les groupes cyano, hydroxyle, alkyle inférieur, alcoxy inférieur, alkyl(inférieur)carbonyle, alkyl(inférieur)carbonyloxy, alkyl(inférieur)amino, dialkyl(inférieur)amino et alkyl(inférieur)carbonylamino, et le noyau B est non-substitué ou substitué par un ou plusieurs substituants pris parmi les atomes d'halogène et les groupes cyano, alkyle en $C_1$-$C_{12}$, alcoxy en $C_1$-$C_{12}$, alcoxyalkyle en $C_2$-$C_{12}$, alcoxyalcoxy en $C_2$-$C_{12}$ et aralcoxy.

**2.** Composés azaméthines selon la revendication 1, caractérisés en ce que, dans la formule (1), $T_1$ et $T_2$ représentent chacun un groupe alkyle inférieur, de préférence un groupe méthyle.

**3.** Composés azaméthines selon la revendication 1 ou 2, caractérisés en ce que, dans la formule (1), le noyau A est non-substitué ou substitué par un atome d'halogène ou un groupe cyano, méthyle ou méthoxy.

**4.** Composés azaméthines selon l'une quelconque des revendications 1 à 3, caractérisés en ce que, dans la formule (1), W représente un groupe méthylène, éthylène, isopropylène, 1,2-cyclohexylène ou 1,2-phénylène.

**5.** Composés azaméthines selon l'une quelconque des revendications 1 à 4, caractérisés en ce que, dans la formule (1), R représente un atome d'hydrogène.

**6.** Composés azaméthines selon l'une quelconque des revendications 1 à 5, caractérisés en ce que, dans la formule (1), Y représente un groupe méthyle, éthyle, allyle, octyle ou benzyle.

**7.** Composés azaméthines selon la revendication 1, caractérisés en ce qu'ils répondent à la formule :

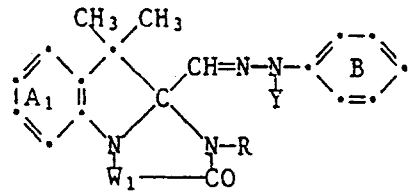

(2)

dans laquelle le noyau $A_1$ est non-substitué ou substitué par un atome d'halogène ou un groupe cyano, alkyle inférieur ou alcoxy inférieur, $W_1$ représente un groupe éthylène, isopropylène, 1,2-cyclohexylène ou 1,2-phénylène, et R, Y et B ont les significations indiquées dans la revendication 1.

**8.** Composés azaméthines selon la revendication 7, caractérisés en ce que, dans la formule (2), le noyau $A_1$ est non-substitué ou substitué par un atome d'halogène ou un groupe alkyle inférieur ou alcoxy inférieur.

**9.** Composés azaméthines selon la revendication 1 ou 7, caractérisés en ce qu'ils répondent à la formule :

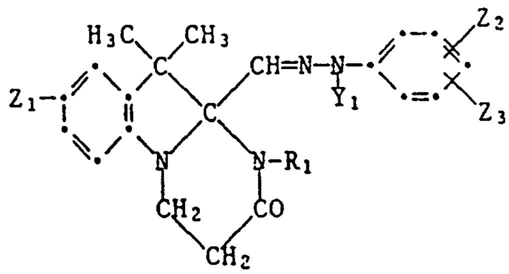

(3)

dans laquelle $R_1$ représente un atome d'hydrogène ou un groupe alkyle inférieur, phényle ou chlorophényle, $Y_1$ représente un groupe alkyle en $C_1$-$C_8$, allyle, benzyle ou phénéthyle, $Z_1$ représente un atome d'hydrogène ou d'halogène, ou un groupe alcoxy en $C_1$-$C_3$ ou alkyle en $C_1$-$C_4$, $Z_2$ représente un atome d'hydrogène ou d'halogène, ou un groupe cyano, alcoxy en $C_1$-$C_5$, alcoxyalcoxy en $C_2$-$C_8$ ou alkyle en $C_1$-$C_{12}$, et $Z_3$ représente un atome d'hydrogène ou d'halogène, ou un groupe alkyle en $C_1$-$C_5$ ou alcoxy en $C_1$-$C_5$.

**10.** Composés azaméthines selon la revendication 9, caractérisés en ce qu'ils répondent à la formule :

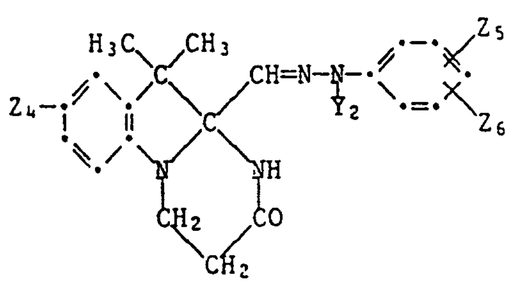

(4)

dans laquelle $Y_2$ représente un groupe méthyle, éthyle, n-octyle, allyle ou benzyle, $Z_4$ représente un atome d'hydrogène ou de chlore, $Z_5$ représente un atome d'hydrogène ou de chlore, ou un groupe alcoxy en $C_1$-$C_4$, alkyle en $C_1$-$C_{12}$ ou alcoxyalcoxy en $C_2$-$C_8$, et $Z_6$ représente un atome d'hydrogène ou de chlore, ou un groupe méthyle.

**11.** Procédé de préparation des composés azaméthines de formule (1) selon la revendication 1, caractérisé en ce que l'on fait réagir un sel d'ammonium quaternaire de formule :

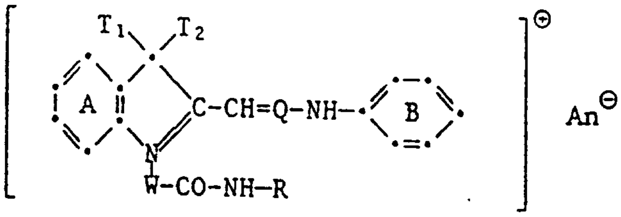

(5)

dans laquelle An représente un anion d'un acide fort, minéral ou organique, et A, B, Q, R, $T_1$, $T_2$ et W ont les significations indiquées dans la revendication 1, avec un agent d'alkylation introduisant le groupe Y, qui est éventuellement substitué par un groupe aryle, et cyclise le composé obtenu pour obtenir le composé azaméthine polycyclique de formule (1).

**12.** Utilisation d'un composé azaméthine répondant à la formule indiquée dans l'une quelconque des revendications 1 à 10, en tant que formateur de colorant dans un matériau d'enregistrement, sensible à la pression ou sensible à la chaleur.

**13.** Matériau d'enregistrement sensible à la pression ou à la chaleur, caractérisé en ce qu'il contient dans son système de réactifs pour la formation de couleur, en tant que formateur de colorant, au moins un composé azaméthine répondant à la formule indiquée dans l'une quelconque des revendications 1 à 10.

**14.** Matériau d'enregistrement sensible à la pression, selon la revendication 13, caractérisé en ce qu'il contient le composé azaméthine, dissous dans un solvant organique, et au moins un accepteur d'électrons solide.

**15.** Matériau d'enregistrement sensible à la pression, selon la revendication 13 ou 14, caractérisé en ce que le composé azaméthine est enfermé dans des microcapsules.

**16.** Matériau d'enregistrement sensible à la pression, selon la revendication 15, caractérisé en ce que le composé azaméthine encapsulé est présent sous la forme d'une couche sur la face postérieure d'une feuille de transfert, et l'accepteur d'électrons est présent sous la forme d'une couche sur la face avant de la feuille réceptrice.

**17.** Matériau d'enregistrement sensible à la pression, selon l'une quelconque des revendications 13 à 16, caractérisé en ce qu'il contient le composé azaméthine et un ou plusieurs autres formateurs de colorants.

**18.** Matériau d'enregistrement sensible à la chaleur, selon la revendication 13, caractérisé en ce qu'il contient, dans au moins une couche, au moins un formateur de colorant, un accepteur d'électrons et éventuellement un liant, le formateur de colorant répondant à la formule indiquée dans l'une quelconque des revendications 1 à 10.